# EUROPEAN PATENT APPLICATION

(11) **EP 3 988 295 A1**
(43) Date of publication of application: **27.04.2022**
(21) Application number: 20203783.4
(22) Date of filing: 26.10.2020
(51) Int. Cl.: B32B 17/10

(54) **PROCESS FOR THE PRODUCTION OF WINDSHIELDS WITH REDUCED OPTICAL DISTORTION**

(71) Applicant: Kuraray Europe GmbH, 65795 Hattersheim (DE)
(72) Inventor: Keller, Uwe, 77210 Avon (FR); Janßen, Christian, 65795 Hattersheim am Main (DE)
(74) Representative: Janßen, Christian Oliver

(57) **Abstract**

The present invention relates to windshields having an obscuration area with reduced optical distortion for operating optical devices.

## Description

The present invention relates to processes to windshields with reduced optical distortion for operating optical devices.

Most windshields for cars are assembled from two glass sheets combined by an interlayer which is usually made from polyvinyl butyral (PVB). The inner glass sheet is generally provided with a non-transparent, mostly black, frame to protect the sealing or the adhesive which mechanically connects the windshield with the chassis from UV radiation. A common technique is to silk screen print low melting black glass frit on the glass surface and then sinter this frit at temperatures over 600 °C. Additionally, other sensors and devices are usually mounted behind non-transparent obscuration areas to avoid stray light and to cover the devices form being seen form outside of the vehicle. Such obscuration areas can also be provided by such black frits as disclosed in US20160243796. However, this technique can lead to optical distortion in the glass and thus, be problematic in the operation of optical sensors positioned behind the windshield.

One solution to this problem has been proposed in WO 2019/121535, which provides obscuration areas printed onto a thin film of PVB which are cut into shape and used together with a standard PVB interlayer. However, the demands regarding the optical quality in windshields is permanently increasing and there is still a need for windshields with an improved optical distortion profile.

Thus, it was one object of the invention to provide a process to manufacture windshields with obscuration areas with reduced optical distortion.

The polymer interlayer material used for the manufacture of windshields is typically produced in an extrusion process, in which the raw plastic material is melted and formed into a continuous film. The interlayer is then cut from said film. It is known that extrusion lines are being formed in machine direction, i.e. in the direction of the extrusion, during the extrusion leading to an uneven thickness profile of the film. Optimization of the extrusion conditions can lead to a certain degree of improvement of the thickness profile of the film. However, formation of an uneven thickness profile cannot be completely avoided. It has now been found by the current inventors that the optical distortion is caused by a lesser extent by the total variation in the thickness profile of the film. The main factor is rather the slope of the local thickness variation. Thus, optical distortion caused by the interlayer can be significantly reduced by using a process wherein the slope of the local thickness variation is analysed and the cutting position of the film is arranged in a way that the optimum area in terms of slope is chosen for the viewing area of the camera(s).

Optical devices including optical cameras and LIDAR sensors are usually arranged behind the upper part of the windshield in modern cars in the form of an array. The field of view of such optical devices can be surrounded by black obscuration but individual devices can also operate underneath the obscuration zone. As it is important to improve optical distortion for the field of view of all cameras and optical devices, a viewing area can be defined in the windshield, that encompasses a stripe from the top of the windshield down to the lowest edge of a field of view in the array of cameras and sensors.

Accordingly, one aspect of the present invention concerns a process for the manufacture of a windshield for use with at least one optical device, said windshield comprising an interlayer between two sheets of glass,
- wherein the at least one optical device operates through a viewing area in the windshield and the viewing area is defined by a horizontal stripe within the windshield with an upper edge defined by a horizontal line 2 cm below the roof-edge of the windshield and a bottom edge defined by a horizontal line within the windshield running 2 cm below the bottom end of the field of view of the optical device being furthest away from the roof-edge of the windshield; and
- wherein the interlayer comprises a film A provided with an area Ao of which at least parts are opaque to visible light and an area Ac which is not opaque to visible light, and
- wherein the interlayer further comprises at least one film B comprising a polyvinyl acetal PB and at least one plasticiser WB, wherein film B has a section (S) covering the viewing area; said process comprising the steps of
   a) prior to lamination, measuring the traverse thickness profile of film B at a certain number of data points;
   b) calculating the global wedge angle of section (S) from the traverse thickness profile measured in step a);
   c) calculating the local wedge angle at every data point measured in step a);
   d) selecting the cutting area of film B based on the calculations in steps b) and c) in a way that the maximum absolute value (local wedge angle - global wedge angle) of section (S) is less than 0.4 mrad;
   e) cutting film B based on the selection of the cutting area performed in step d), and
   e) laminating film A and film B together between the two sheets of glass.

The term "viewing area" shall denote that horizontal stripe of the film where, after cutting and lamination, the at least one optical device will be located behind the windshield and is defined as a horizontal stripe between a horizontal line located 2 cm below the roof-edge of the windshield and a horizontal line located 2 cm below the bottom end of the field of view optical device being furthest away from the roof-edge of the windshield. In other word, the bottom edge of the viewing area is defined as a horizontal line located 2 cm below the lower end of the field of view of the lowest sitting optical device in case there is more than one optical device present. Thus in order to accommodate for enough periphery to calculate local slopes (a vertical 20 mm to each side) the viewing area is defined with an offset of 2 cm below the roof edge and 2 cm below the lowest edge of a viewing window in the array.

In a preferred embodiment of the present invention, the viewing area is defined by a horizontal stripe within the windshield with an upper edge defined by a horizontal line 2 cm below the roof-edge of the windshield and a bottom edge defined by a horizontal line 27 cm below the roof edge of the windshield.

The unit "mrad" is the unit for angular measurement and means 1 mm thickness variance over 100 cm length of film.

The term "visible light" shall denote light having wavelengths in the range of 400-800 nm.

The term "obscuration area" refers to any region of the laminate having a light transmission in the visible spectrum of less than 5%. In a variant, the obscuration area may fade out towards transparency. In such variants, at least a part of the obscuration area of the laminate has a light transmission in the visible spectrum of less than 5%.

Film A is applied to the surface of film B and the surface area of film A is substantially smaller than the surface area of film B. In other words, a small patch of film A is combined with a film B, which in turn is generally the size of the complete windshield. The area of film B which, after lamination, is overlaying with the viewing area of the optical device, for example a camera, shall be denoted as "section (S)". Said section (S) is the area of film B which requires the best optical properties.

In modern cars, various optical devices are positioned on the inside of the car behind the windshield. Optical devices are chosen from digital cameras, range finders, haze meters, target detectors, scanning laser devices (LIDAR) or related devices using electromagnetic radiation from within the UV/VIS and NIR/IR range of the spectrum.

The term "global wedge angle" shall denote the slope of the film over to total of the viewing area from 2 cm below the roof-edge to 2 cm below the bottom end of the field of view of the optical device being furthest away from the roof-edge of the windshield in the vertical direction, i.e. the slope in film B in the viewing area of the windshield. The vertical direction of the windshield correspond to the traverse direction of the film when produced by the extrusion process. In a perfectly flat interlayer, film B would thus have a global wedge angle of 0. In case of windshields for use with head-up-display devices, interlayers can have a wedge-shape to avoid a double-image in the display by reflection from the two glass sheets. In case of said wedge-shaped windshields, the global wedge angle of film B can significantly differ from 0 and is generally from 0.15 to 0.80 mrad. In order to measure the slope at a certain position in film B correctly, this global wedge angle is thus subtracted from the local wedge angle to arrive at the absolute value.

The term "absolute value" of a , also referred to as modulus or as the mathematical function |value|, shall denote the non-negative value of a given measured value without regard to its sign (+ or -).

The maximum absolute value (local wedge angle - global wedge angle) of section (S) is advantageously chosen to be less than 0.35 mrad, more preferably less than 0.30 mrad, most preferably less than 0.25 mrad and especially less than 0.15 mrad. The lower limit of maximum absolute value is 0.00001 mrad, preferably 0.0001, more preferably 0.001, most preferably 0.01.

The term "traverse" shall denote the traverse direction in the film and means the direction with an angle of 90º to the machine direction of the film. The machine direction is the direction in the film when the film is produced by extrusion.

The traverse thickness profile is measured as described below in the experimental section.
Fig. 1 depicts a windshield with a viewing area for three optical devices.
Fig. 2 shows the results from the measurement of the traverse thickness profile of a wedge-shape film B with 0.52 mrad as well as the results of the absolute value values (small graph) for a first cutting section as a comparative example.
Fig. 3 shows the results from the measurement of the traverse thickness profile of a wedge-shape film B with 0.52 mrad as well as the results of the absolute value values (small graph) for a second cutting section according to the invention.
Fig. 4 shows the results from the measurement of the traverse thickness profile of a flat film B as well as the results of the absolute value values (small graph) for a first cutting section as a comparative example.
Fig. 5 shows the results from the measurement of the traverse thickness profile of a flat film B as well as the results of the absolute value values (small graph) for a second cutting section according to the invention.

Preferably, the traverse thickness profile of film B is measured with a measurement interval of 1 mm between the individual data points.

Preferably, the inventive interlayer does not only avoid large peaks of maximum wedge angles in the viewing area but also provides low variation throughout that area, which can be important to avoid double image in transmission for far distanced light points ahead of the car.

Accordingly, in another aspect of the present invention, the average absolute value (local wedge angle - global wedge angle) of section (S) is less than 0.15 mrad.

The term "average absolute value" shall denote the arithmetic mean, i.e. the sum of the individual absolute values as divided by the number of value.

Also preferably, the average absolute value (local wedge angle - global wedge angle) of section (S) is less than 0.1 mrad, more preferably less than 0.05 mrad, even more preferably less than 0.025 mrad. The lower limit of absolute value is 0.00001 mrad, preferably 0.0001, more preferably 0.001, most preferably 0.01.

Preferably, film A comprises polyvinyl butyral (PVB), ethylene-vinyl acetate (EVA), thermoplastic polyurethane (TPU), polyethylene terephthalate (PET), or a mixture thereof.

Film A is produced separately from film B (for example extruded or solvent cast) and has either no plasticiser at all or sufficiently small proportion of plasticiser so that subsequent functionalization and processing is not adversely influenced.

Thus, the amount of plasticiser in film A is less than 10 % by weight, more preferably less than 5 % by weight and most preferably less than 2 % by weight.

Hereinafter, the term "prior to lamination" refers to the state of the films A and B prior to having any contact to each other. For example, the term refers to the composition of each film separately formed and separately wound to individual rolls. The term "prior to lamination" refers to the state for the layers or films before combining them either in the lamination process of the laminated glass or prior to building a stack from the layers used for lamination.

Also preferably, the opaqueness of area Ao is provided by a printed or coated layer on at least one surface of film A or by a fully colored film A.

A colored patch of polyethylene terephthalate (PET) is especially preferred. A fully colored film A means a film A wherein a dye or pigment is added to the polymer mixture before or during extrusion.

If polyvinyl butyral (PVB) is used for film A, a printed or coated region is preferable. The printed or coated layer contains an inorganic or organic pigment, which should not dissolve in the polymer matrix and thus resist migration from film A to B.

As pigments, preferable carbon black, iron oxides, polyaniline, perylenes or spinel pigments are used. The pigments may be dispersed in a carrier fluid like water, alcohol or mixtures of alcohol and water. Furthermore, binders like polyvinylalcohol, polyvinylbutyral, polyvinylpyrrolidone, polyacrylates, polyurethanes or poly styrene-acrylate may be present. Such printing compositions are referred to as "printing inks" or simply "inks" hereinafter.

Water-based printing inks are preferred over printing inks based on organic solvents since they do not swell or dissolve the film A and/or lead to film defects. Printing inks based on organic solvents can be used if the coating is thin and/or the drying step is fast such that the solvent does not migrate into the PVB film.

The printing inks can be applied via techniques that are commonly known in the printing industry such as ink jet printing, offset printing, rotogravure printing, flexography, and screen-printing, followed usually by a drying step.

Film B may be any plasticized PVB-film known in the art. The film B may contain, in the starting state prior to lamination and/or in a stack prepared for lamination between glass sheets, a single plasticiser as well as mixtures of plasticisers.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 µm, preferably 600 - 1000 µm, preferably 700 - 900 µm.

Film B used in accordance with the invention contains polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals may be identical or different, pure or a mixture of polyvinyl alcohols or ethylene vinyl alcohol copolymers with different degree of polymerisation or degree of hydrolysis.

The polyvinyl acetate content of the polyvinyl acetals can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

Polyvinyl acetals having a proportion of polyvinyl acetate groups, either identically or differently, of 0.1 to 20 mol %, preferably 0.5 to 3 mol %, or 5 to 8 mol %, are preferred.

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

In addition, films A and B may contain further additives, such as alkaline or alkaline earth metal salts residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

Cutting film A and film B can be performed by any conventional technique, e.g. by cutting with a die, rotating or stationary blade, water jet, band saw or a laser.

Film A is combined with film B and optionally any other films in the preferred orientation and subsequently, the windshields are produced by a lamination process known in the art. Examples of the lamination process as well as the techniques to apply the obscuration area to film A are also known in the art and can be found inter alia in WO 2019/121535 and WO 2019/038043.

In a further aspect, the invention concerns a windshield for use with at least one optical device, comprising two sheets of glass and an interlayer between the two sheets of glass,
- wherein the at least one optical device operates through a viewing area in the windshield and the viewing area is defined by a horizontal stripe within the windshield with an upper edge defined by a horizontal line 2 cm below the roof-edge of the windshield and a bottom edge defined by a horizontal line within the windshield running 2 cm below the bottom end of the field of view of the optical device being furthest away from the roof-edge of the windshield; and
- wherein the interlayer comprises a film A provided with an area Ao of which at least parts are opaque to visible light and an area Ac which is not opaque to visible light, and
- wherein the interlayer further comprises at least one film B comprising a polyvinyl acetal PB and at least one plasticiser WB, wherein film B has a section (S) covering the viewing area with a maximum absolute value (local wedge angle - global wedge angle) of less than 0.4 mrad.

Preferably, the maximum absolute value (local wedge angle - global wedge angle) of section (S) is less than 0.3 mrad, more preferably less than 0.20 mrad. The lower limit of the maximum absolute value is 0.00001 mrad, preferably 0.0001, more preferably 0.001, most preferably 0.01.

Preferably the opaqueness of area Ao is provided by a printed or coated layer on at least one surface of film A or by a fully colored film A.

Also preferably, the at least one optical device is chosen from digital cameras, range finders, haze meters, rain sensors, target detectors, scanning laser devices (LIDAR) or related devices using electromagnetic radiation from within the UV/VIS and NIR/IR range of the spectrum.

Also preferably, film A comprises polyvinyl butyral (PVB), ethylene-vinyl acetate (EVA), thermoplastic polyurethane (TPU), polyethylene terephthalate (PET), or a combination thereof.

### Experimental Section

### Preparation of Film A

PVB resin powder (commercial grade Mowital^{®} B60H of Kuraray Europe GmbH) was fed to the inlet funnel of a lab-extruder of the corotating twin screw type. The melt was extruded from a 34 cm wide slit die onto a cooled chill roll to form and subsequently wind thin plasticizer free films in a width of 30 cm with a thickness of 50 µm within a tolerance of 3%. The film was printed using a water-based printing ink suitable for flexographic printing based on polyurethane as binder and carbon black as pigment, commercially available from Siegwerk Druckfarben AG&Co KGaA, Siegburg. The necessary opaqueness was achieved by consecutive printing steps.

### Preparation of Film B

Commercial automotive grade PVB film (TROSIFOL^{®} V100 0.76 from Kuraray Europe GmbH) was used.

### Measurement of optical distortion:

Optical distortion can be measured using a LABSCAN-SCREEN system from ISRA VISION on a laminated windshield under an inclination angle of 60°.

### Measurement of traverse thickness profile:

A test portion of film B was allowed to relax in a clean and controlled environment (20 °C, 28% relative air humidity) for 24 h. A 10 cm wide strip was cut in traverse direction over the complete width of film B. The end of the strip designated to be positioned at the top of the windshield was marked. The traverse thickness profile of the strip of film B was measured using a Vollmer VDM measurement station of Friedrich Vollmer Feinmessgerätebau GmbH, Hagen. This measurement station uses two tactile transducers for the measurement and is equipped to digitally record x,y thickness data. Calculating a moving average from the semi continuous raw data, the traverse thickness profile with a measurement interval of 1 mm was obtained. Steel rollers of 10 mm diameter are used as transducer heads, in order not to hinder the steady transport of the strip of film B in the transducer gap. The thickness (y) over length (x) data is expressed in mm and organized in a spreadsheet. The slope function provided in Excel^{®} 2016 from Microsoft corporation was used and the result was multiplied with 1000 for conversion into mrad to give the global wedge angle of the later viewing area.

The local wedge angle was measured for each individual data point wherein the individual data points are 1 mm apart from one another. The local wedge angle at each data point was calculated using the previous and the following 20 data points, i.e. in a periphery of a total of 41 mm, using the slope function provided in Excel^{®} 2016 from Microsoft corporation. Said periphery is used to evaluate the local wedge angle within a typical window of field of view of modern camera systems.

After evaluation of the traverse thickness profile, film B was cut from the film roll according to the invention to optimize the absolute value (local wedge angle - global wedge angle) across section (s).

### Lamination

A laminated glass can be produced using the following procedure: film A and film B were stored in a conditioned area having a constant climate of 23 °C / 28 % RH. Test laminates were obtained by combining thin clear glass (2 x Planiclear^{®} 2.1 mm) cleaned with deionized water (< 5 µS) on a flat glass-washing machine with the film A and B in the following lay-up order: bottom glass (tin side) | film B | film A | (air side) top glass. The printed region of film A faced film B. The size of these laminates was 30 cm by 30 cm. The sandwiches were put into vacuum bags in an oven at 120 °C for 30 min to produce pre-laminates. Lamination was then accomplished by using an autoclave with industry-standard conditions (90 min total; comprising 30 min hold time at 140 °C and 12 bar).

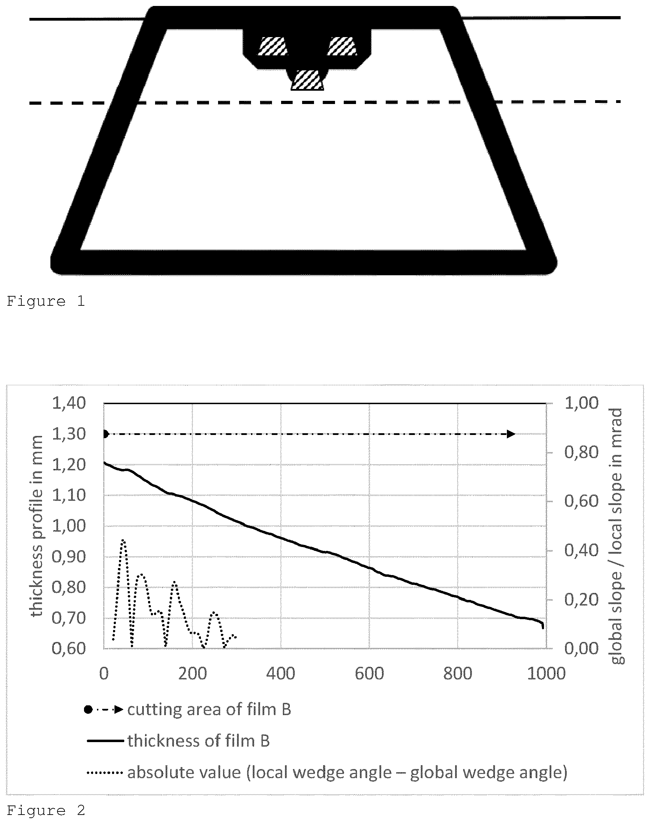

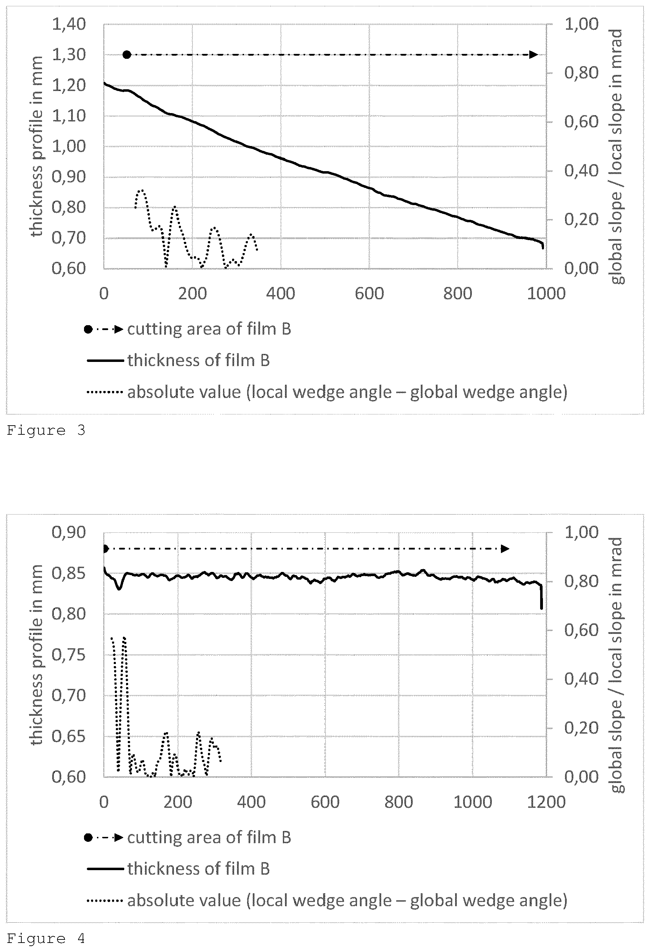

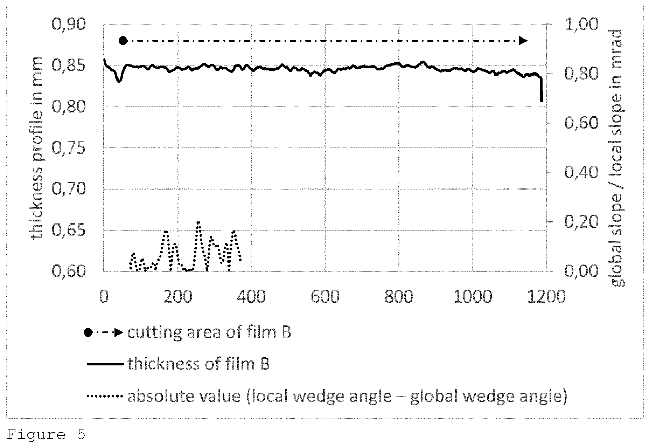

The results shown in figures 2 to 5 show that by choosing an optimized position for the cutting area of film B the average absolute value of the slope and thus, the optical distortion can be significantly reduced.

| Geometry of film B | Continuous wedge with nominal 0.52 mrad across the total width | | Flat with a nominal 0 mrad across the total width | |
|---|---|---|---|---|
| Figure | 2 | 3 | 4 | 5 |
| cutting position | Comparative | According | Comparative | According |
| total width film B before cutting (mm) | 990 | | 1180 | |
| width of cutting area of film B (mm) | 930 | | 1100 | |
| height of viewing area / section (S) (mm) | 280 | | 300 | |
| global slope in section (S) (mrad) | -0.65 | -0.63 | 0.02 | 0.00 |
| average absolute value (local wedge angle - global wedge angle) | 0.15 | 0.12 | 0.11 | 0.07 |
| maximum absolute value (local wedge angle - global wedge angle) | 0.44 | 0.32 | 0.58 | 0.20 |

## Claims

1. A process for the manufacture of a windshield for use with at least one optical device, said windshield comprising an interlayer between two sheets of glass,
- wherein the at least one optical device operates through a viewing area in the windshield and the viewing area is defined by a horizontal stripe within the windshield with an upper edge defined by a horizontal line 2 cm below the roof-edge of the windshield and a bottom edge defined by a horizontal line within the windshield running 2 cm below the bottom end of the field of view of the optical device being furthest away from the roof-edge of the windshield; and
- wherein the interlayer comprises a film A provided with an area Ao of which at least parts are opaque to visible light and an area Ac which is not opaque to visible light, and
- wherein the interlayer further comprises at least one film B comprising a polyvinyl acetal PB and at least one plasticiser WB, wherein film B has a section (S) covering the viewing area; said process comprising the steps of
a) prior to lamination, measuring the traverse thickness profile of film B at a certain number of data points;
b) calculating the global wedge angle of section (S) from the traverse thickness profile measured in step a);
c) calculating the local wedge angle at every data point measured in step a);
d) selecting the cutting area of film B based on the calculations in steps b) and c) in a way that the maximum absolute value (local wedge angle - global wedge angle) of section (S) is less than 0.4 mrad;
e) cutting film B based on the selection of the cutting area performed in step d), and
e) laminating film A and film B together between the two sheets of glass.

2. The process according to claim 1 wherein the traverse thickness profile of film B is measured with a measurement interval of 1 mm between the individual data points.

3. The process according to claim 1 or 2 wherein the average absolute value (local wedge angle - global wedge angle) of section (S) is less than 0.15 mrad.

4. The process according to any one of the previous claims wherein the maximum absolute value (local wedge angle - global wedge angle) of section (S) is more than 0.01 mrad.

5. The process according to any one of the previous claims wherein the opaqueness of area Ao is provided by a printed or coated layer on at least one surface of film A or by a fully colored film A.

6. The process according to any one of the previous claims wherein the at least one optical device is chosen from digital cameras, range finders, haze meters, rain sensors, target detectors, scanning laser devices (LIDAR) or related devices using electromagnetic radiation from within the UV/VIS and NIR/IR range of the spectrum.

7. The process according to any one of the previous claims wherein film A comprises polyvinyl butyral (PVB), ethylene-vinyl acetate (EVA), thermoplastic polyurethane (TPU), polyethylene terephthalate (PET), or a combination thereof.

8. A windshield for use with at least one optical device, comprising two sheets of glass and an interlayer between the two sheets of glass,
- wherein the at least one optical device operates through a viewing area in the windshield and the viewing area is defined by a horizontal stripe within the windshield with an upper edge defined by a horizontal line 2 cm below the roof-edge of the windshield and a bottom edge defined by a horizontal line within the windshield running 2 cm below the bottom end of the field of view of the optical device being furthest away from the roof-edge of the windshield; and
- wherein the interlayer comprises a film A provided with an area Ao of which at least parts are opaque to visible light and an area Ac which is not opaque to visible light, and
- wherein the interlayer further comprises at least one film B comprising a polyvinyl acetal PB and at least one plasticiser WB, wherein film B has a section (S) covering the viewing area with an maximum absolute value (local wedge angle - global wedge angle) of less than 0.4 mrad.

9. The windshield according to claim 8 wherein the maximum absolute value (local wedge angle - global wedge angle) of section (S) is less than 0.25 mrad.

10. The windshield according to claim 8 or 9 wherein the average absolute value (local wedge angle - global wedge angle) of section (S) is less than 0.15 mrad.

11. The windshield according to any one of claims 8 to 10 wherein the opaqueness of area Ao is provided by a printed or coated layer on at least one surface of film A or by a fully colored film A.

12. The windshield according to any one of claims 8 to 11 wherein the at least one optical device is chosen from digital cameras, range finders, haze meters, rain sensors, target detectors, scanning laser devices (LIDAR) or related devices using electromagnetic radiation from within the UV/VIS and NIR/IR range of the spectrum.

13. The windshield according to any one of claims 8 to 12 wherein film A comprises polyvinyl butyral (PVB), ethylene-vinyl acetate (EVA), thermoplastic polyurethane (TPU), polyethylene terephthalate (PET), or a mixture thereof.
